# EUROPÄISCHE PATENTSCHRIFT

(11) **EP 2 237 986 B1**
(45) Veröffentlichungstag und Bekanntmachung des Hinweises auf die Patenterteilung: **07.09.2011**
(21) Anmeldenummer: 08869196.9
(22) Anmeldetag: 26.11.2008
(51) Int. Cl.: B60L 3/00, B60L 11/00, B60L 11/12

(54) **VERFAHREN ZUM BETREIBEN EINES ELEKTRISCHEN NETZWERKS, INSBESONDERE EINES KRAFTFAHRZEUGS**
METHOD FOR OPERATING AN ELECTRICAL NETWORK, IN PARTICULAR OF A MOTOR VEHICLE
PROCÉDÉ DE FONCTIONNEMENT D'UN RÉSEAU ÉLECTRIQUE, EN PARTICULIER D'UN VÉHICULE AUTOMOBILE

(30) Priorität: 27.12.2007 DE 102007062795; 20.11.2008 DE 102008043943
(43) Veröffentlichungstag der Anmeldung: 13.10.2010
(73) Patentinhaber: Robert Bosch GmbH, 70442 Stuttgart (DE)
(72) Erfinder: PUSHKOLLI, Beqir, 71638 Ludwigsburg (DE); BLIND, Stefan, 70736 Fellbach (DE); RAICHLE, Daniel, 71735 Eberdingen-Nussdorf (DE); GOETTING, Gunther, 70469 Stuttgart (DE); STAHL, Manfred, 70439 Stuttgart (DE)
(86) Internationale Anmeldenummer: PCT/EP2008/066190
(87) Internationale Veröffentlichungsnummer: WO 2009/083342

(56) Entgegenhaltungen:
- EP-A- 1 157 873
- DE-A1- 10 041 788
- JP-A- 9 046 812
- JP-A- 2005 033 901
- JP-A- 2007 318 968
- US-A1- 2001 040 437

## Beschreibung

Die Erfindung betrifft ein Verfahren zum Betreiben eines elektrischen Netzwerks, insbesondere eines Kraftfahrzeugs, wobei das Netzwerk mindestens einen elektrischen Speicher, mindestens eine elektrische Maschine und mindestens einen die elektrische Maschine ansteuernden Wechselrichter aufweist, wobei bei Erfassen einer Fehlfunktion der elektrische Speicher von dem Netzwerk elektrisch getrennt und der Wechselrichter bei anschließendem Überschreiten einer vorgebbaren Spannungsgrenze einer Netzwerkspannung des Netzwerks in einen Kurzschlussbetrieb geschaltet wird.

### Stand der Technik

Verfahren der eingangs genannten Art sind bekannt. Vor Allem bei den immer weiter verbreiteten Hybridantriebsvorrichtungen von Kraftfahrzeugen, die mindestens eine elektrische Maschine und einen Verbrennungsmotor als Antreibaggregate aufweisen, sind eine Vielzahl von Verfahren zum Betreiben der zugehörigen elektrischen Netzwerke bekannt. Dabei ist es von Bedeutung, die Netzwerkspannung des Netzwerks einzustellen, um sämtlichen an das Netzwerk elektrisch angeschlossenen Verbrauchern eine ausreichende Netzwerkspannung bereitzustellen. Da bei Hybridkraftfahrzeugen verhältnismäßig hohe Spannungen bereitgestellt werden müssen, um die elektrische Maschine motorisch zum Antreiben des Kraftfahrzeugs verwenden zu können, sind zum Schutz des elektrischen Netzwerks und der an dem elektrischen Netzwerk elektrisch angeschlossenen Komponenten Verfahren bekannt, die eine Beschädigung verhindern. So weist beispielsweise der die elektrische Maschine ansteuernde Wechselrichter einen Überspannungsschutz auf, der bei Überschreiten einer vorgebbaren Spannungsgrenze einer Netzwerkspannung, also wenn die Netzwerkspannung die vorgebbare Spannungsgrenze überschreitet, den Wechselrichter in einen Kurzschlussbetrieb schaltet. Darüber hinaus ist es bekannt, den elektrischen Speicher von dem Netzwerk elektrisch zu trennen, wenn eine Fehlfunktion, beispielsweise des elektrischen Speichers, erfasst wird, wie z.B. in den Dokumenten JP 2005033901 und EP 1157873, Befindet sich die elektrische Maschine zu diesem Zeitpunkt im generatorischen Betrieb, so hat dies zur Folge, dass durch das "Abwerfen" des elektrischen Speichers sich die Netzwerkspannung stark erhöht und dadurch die vorgebbare Grenzspannung des Wechselrichters überschritten und darauf hin der Wechselrichter in den Kurzschlussbetrieb geschaltet wird. Da nunmehr weder der elektrische Speicher noch die elektrische Maschine eine Leistung in das Netzwerk einbringen beziehungsweise eine Spannung bereitstellen, wird die in dem Netzwerk vorhandene Spannung, beispielsweise eines Zwischenkreiskondensators schnell abgebaut, bis das elektrische Netzwerk elektrisch zusammenbricht beziehungsweise keine Netzwerkspannung oder keine nutzbare Netzwerkspannung mehr vorliegt. Sind Hochvolt-Verbraucher an das Netzwerk mitangeschlossen und aktiviert, so bricht das Netzwerk entsprechend schneller zusammen. Da nunmehr keine Netzwerkspannung vorhanden ist, kann auch die elektrische Maschine nicht mehr generatorisch betrieben/geregelt werden. Das ganze System kommt zum Erliegen.

### Offenbarung der Erfindung

Das erfindungsgemäße Verfahren wird im Anspruch 1 genau definiert. Vorteilhafte Ausgestaltungen sind Gegenstand der auf diese rückbezogenen Unteransprüche.

Das erfindungsgemäße Verfahren sieht vor, dass Leistungshalbleiter des Wechselrichters derart geschaltet werden, dass durch die angetriebene elektrische Maschine eine Spannung induziert und mittels Freilaufdioden am elektrischen Netzwerk bereitgestellt wird, wobei die induzierte Spannung zum generatorischen Betreiben der elektrischen Maschine verwendet wird, sodass eine vorgebbare Netzwerkspannung durch die elektrische Maschine eingestellt wird. Wird die elektrische Maschine beziehungsweise ein Rotor der elektrischen Maschine also angetrieben, zum Beispiel in einem Schleppbetrieb des Kraftfahrzeugs, wenn die elektrische Maschine durch das Rollen von Antriebsrädern des Kraftfahrzeugs auf einer Fahrbahn angetrieben wird, werden die Leistungshalbleiter des Wechselrichters derart geschaltet, dass eine Spannung in der elektrischen Maschine, insbesondere in den Statorwicklungen, induziert und mittels Freilaufdioden an dem elektrischen Netzwerk bereitgestellt wird. Die hierdurch induzierte beziehungsweise bereitgestellte Spannung ist dabei naturgemäß von der Drehzahl der elektrischen Maschine beziehungsweise des Rotors der elektrischen Maschine abhängig. Die so im "Leerlaufbetrieb" der elektrischen Maschine induzierte Spannung wird erfindungsgemäß zum generatorischen Betreiben der elektrischen Maschine verwendet, sodass durch diese eine gewünschte/vorgebbare Netzwerkspannung eingestellt wird. Die induzierte Spannung wird vorteilhafterweise zum Betreiben eines Spannungsreglers verwendet, der der elektrischen Maschine ein (generatorisches) Drehmoment zum Erzeugen einer Netzwerkspannung vorgibt. Durch das vorteilhafte Verfahren ist es also möglich, das elektrische Netzwerk nach einem Ausfall des elektrischen Speichers, insbesondere der Hochvolt-Batterie auf einfachste Art und Weise wieder zu reaktivieren. Sobald die elektrische Maschine wieder generatorisch betrieben werden kann, um die Netzwerkspannung einzustellen, können auch ein oder mehrere Hochvolt-Verbraucher wieder aktiviert werden, wobei dann das Solldrehmoment in Abhängigkeit von den angeschlossenen Hochvolt-Verbrauchern und deren Leistungsbedarf vorgegeben wird.

Vorteilhafterweise wird bei Erfassen der Fehlfunktion zumindest ein mit dem Netzwerk elektrisch verbundener Verbraucher, insbesondere Hochvolt-Verbraucher abgeschaltet. Hierdurch erfolgt ein besonders zeitnahes bis gleichzeitiges Deaktivieren von an dem Netzwerk angeschlossenen Verbrauchern zu dem Trennen des elektrischen Speichers, insbesondere der Hochvolt-Batterie von dem Netzwerk. Die Geschwindigkeit, mit der das Netzwerk zusammenbricht, wird dadurch verringert.

Nach einer Weiterbildung der Erfindung wird die elektrische Maschine durch einen Verbrennungsmotor angetrieben, der mit Hilfe eines eigenen Motor-Steuergeräts geregelt wird. Bilden die elektrische Maschine und der Verbrennungsmotor vorteilhafterweise Antriebsaggregate eines Hybrid-Antriebs, so können diese auf einfache Art und Weise mechanisch miteinander wirkverbunden werden, sodass im Stillstand des Kraftfahrzeugs die elektrische Maschine durch den Verbrennungsmotor antreibbar ist und somit eine Spannung zum Wiedereinstieg in die Spannungsregelung, wie oben beschrieben, induzierbar ist.

Zweckmäßigerweise wird das Verfahren in Abhängigkeit von der Drehzahl des Verbrennungsmotors und/oder der elektrischen Maschine durchgeführt. Besonders bevorzugt wird hierzu ein Drehzahlbereich vorgegeben, innerhalb dessen die Durchführung des Verfahrens erfolgt beziehungsweise erfolgen kann.

Vorteilhafterweise wird das Verfahren dann durchgeführt, wenn die Drehzahl der elektrischen Maschine oberhalb einer Leerlaufdrehzahl des Verbrennungsmotors liegt. In der Regel sind die elektrischen Maschine und der Verbrennungsmotor direkt miteinander mechanisch wirkverbindbar, sodass die Drehzahl der elektrischen Maschine der des Verbrennungsmotors entspricht. Damit wird die kleinstmögliche induzierte Spannung durch die Leerlaufdrehzahl des Verbrennungsmotors bestimmt.

Alternativ oder zusätzlich dazu wird das Verfahren vorteilhafterweise dann durchgeführt, wenn die Drehzahl der elektrischen Maschine unterhalb einer vorgebbaren Grenzdrehzahl der elektrischen Maschine liegt. Besonders bevorzugt wird dabei die Grenzdrehzahl der elektrischen Maschine in Abhängigkeit von einer maximal erlaubten induzierten Spannung vorgegeben. Mit anderen Worten wird eine Grenze für die induzierte Spannung vorgegeben. Da die induzierte Spannung von der Drehzahl der elektrischen Maschine abhängig ist, wird diese Spannungs-Grenze auf einfache Art und Weise mittels der Grenzdrehzahl bestimmt. Die Grenzdrehzahl beziehungsweise - spannung wird dabei derart gewählt, dass die induzierte Spannung unterhalb eines Wertes liegt, der zur Beschädigung von Komponenten des elektrischen Netzwerks, insbesondere des Wechselrichters, führen würde. In Bezug auf den Wechselrichter würde ein Überschreiten der Grenzdrehzahl bedeuten, dass der Überspannungsschutz des Wechselrichters erneut greifen würde und damit eine Regelung der elektrischen Maschine nicht möglich ist. Der Drehzahlbereich, innerhalb dessen das vorteilhafte Verfahren durchgeführt werden kann, wird somit vorteilhafterweise durch die Leerlaufdrehzahl des Verbrennungsmotors und die Grenzdrehzahl der elektrischen Maschine definiert.

Nach einer Weiterbildung der Erfindung wird der Kurzschlussbetrieb des Wechselrichters beibehalten, solange die Drehzahl der elektrischen Maschine oberhalb der vorgebbaren Grenzdrehzahl liegt. Dieser Notbetrieb des Wechselrichters wird also erst dann aufgegeben, wenn die Drehzahl sich innerhalb des oben beschriebenen Drehzahlbereichs befindet und eine Beschädigung von Komponenten des Netzwerks ausgeschlossen werden kann.

Besonders bevorzugt ist vorgesehen, dass die Drehzahl des Verbrennungsmotors verringert wird, wenn sie oberhalb der Grenzdrehzahl liegt. Mit anderen Worten ist ein aktives Eingreifen der Spannungsregelung des Netzwerks in den Fahrbetrieb des Verbrennungsmotors vorgesehen, um die Drehzahl des Verbrennungsmotors und die der damit mechanisch wirkverbundenen elektrischen Maschine in den erlaubten, wie oben beschriebenen, Drehzahlbereich zu bringen. Befindet sich das Fahrzeug in Bewegung, so kann die Drehzahl der elektrischen Maschine auch durch Betätigung von Bremsen des Fahrzeugs verringert werden, sofern die elektrische Maschine mechanisch mit Antriebsrädern des Fahrzeugs und beispielsweise nicht mit dem Verbrennungsmotor wirkverbunden ist.

Wenn die Hochvolt-Batterie bei einer bestimmten Verbrennungsmotor-Leerlaufdrehzahl ausfällt und es dabei zu einem bestimmten Lastsprung kommt, besteht die Möglichkeit, dass der Verbrennungsmotor ausgeht. Eine vorteilhafte Möglichkeit, dies zu verhindern wird in einer vorteilhaften Ausgestaltung der Erfindung erreicht, indem die Leerlaufdrehzahl des Verbrennungsmotors erhöht wird, in besonders vorteilhafter Weise von sechshundert auf tausend Umdrehungen pro Minute und/oder indem dem elektrischen Antrieb ein bestimmtes Sollmoment vorgegeben wird, wodurch eine Drehmomentenreserve erhalten wird. Die Erhöhung der Leerlaufdrehzahl des Verbrennungsmotors und/oder die Vorgaben eines bestimmten Sollmoments wird in vorteilhafter Weise vom Motor-Steuergerät über entsprechende Ansteuersignale durchgeführt.

Schließlich ist vorgesehen, dass als Wechselrichter ein Pulswechselrichter verwendet wird.

### Kurze Beschreibung der Zeichnungen

Im Folgenden soll die Erfindung anhand einiger Figuren näher erläutert werden. Dazu zeigen
- Figur 1: ein Ausführungsbeispiel eines elektrischen Netzwerks eines Hybrid- Kraftfahrzeugs in einer schematischen Darstellung,
- Figur 2: ein Ausführungsbeispiel des vorteilhaften Verfahrens zum Betreiben des elektrischen Netzwerks und
- Figur 3: einen Spannungsregler zum Regeln der Spannung des Netzwerks.

### Ausführungsformen der Erfindung

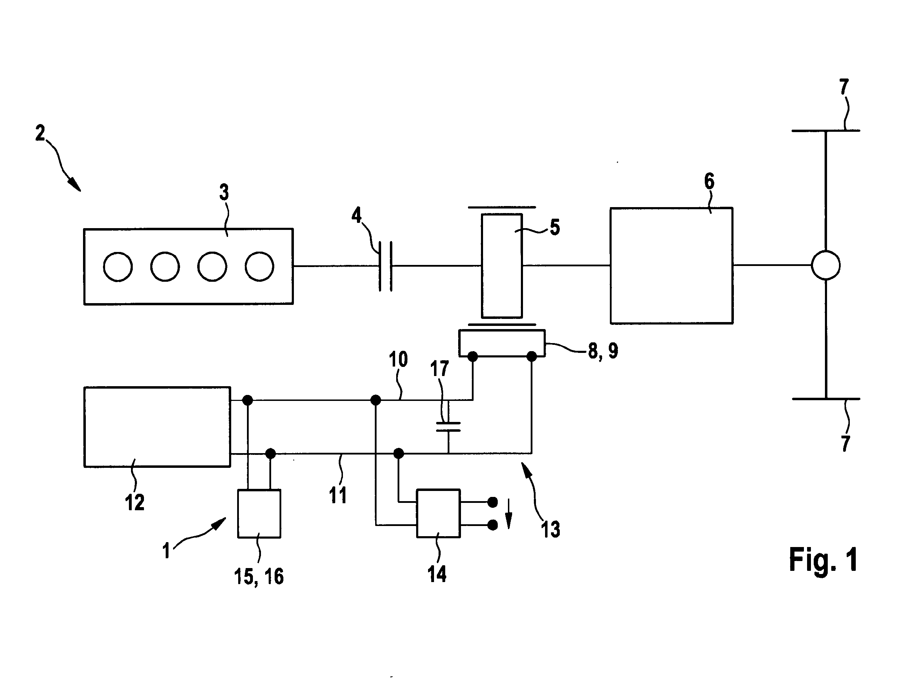

Die Figur 1 zeigt in einer schematischen Darstellung ein Ausführungsbeispiel eines elektrischen Netzwerks 1 einer Hybridantriebsvorrichtung 2 eines hier nicht näher dargestellten Kraftfahrzeugs. Die Hybridantriebsvorrichtung 2 weist einen Verbrennungsmotor 3 und eine mit dem Verbrennungsmotor 3 mittels einer Kupplung 4 mechanisch wirkverbindbare elektrische Maschine 5 als Antriebsaggregate sowie ein mit der elektrischen Maschine 5 mechanisch wirkverbundenes Getriebe 6 auf, welches das von den Antriebsaggregaten erzeugte Drehmoment auf Antriebsräder 7 des Kraftfahrzeugs weiterleitet. Der elektrischen Maschine 5 ist ein Wechselrichter 8, der als Pulswechselrichter 9 ausgebildet ist, zugeordnet, mittels dessen die elektrische Maschine 5 angesteuert beziehungsweise geregelt wird. Der Wechselrichter 8 ist mittels elektrischer Verbindungen 10 und 11 mit einem elektrischen Speicher 12, insbesondere einer Hochvolt-Batterie verbunden. An diesen, durch den Wechselrichter 8, den elektrischen Speicher 12 sowie die elektrischen Verbindungen 10 und 11 gebildeten Zwischenkreis 13 des elektrischen Netwerks 1, ist weiterhin ein Gleichstromwandler 14 sowie mindestens ein Hochvolt-Verbraucher 15, beispielsweise in Form eines Klimakompressors 16, angeschlossen. Im Normalbetrieb sorgt ein Spannungsregler, hier nicht dargestellt, dafür, dass in dem Netzwerk 1 eine im Wesentlichen konstante Netzwerkspannung in Abhängigkeit von aktivierten/deaktivierten Verbrauchern des Netzwerks 1 in dem Netzwerk 1 zur Verfügung steht.

Zum Schutz der an dem Netzwerk 1 angeschlossenen Komponenten, wie dem Gleichstromwandler 14 und dem Klimakompressor 16, ist vorgesehen, dass bei Erfassen einer Fehlfunktion in dem elektrischen Netzwerk 1, insbesondere des elektrischen Speichers 12, der elektrische Speicher 12 von dem Netzwerk 1 beziehungsweise dem Zwischenkreis 13 elektrisch getrennt wird. Fällt der elektrische Speicher 12 somit aus, kommt es zu einer Überspannung am Zwischenkreis 13 und der Pulswechselrichter 9 wird in einen aktiven Kurzschluss geschaltet, sodass nunmehr auch die elektrische Maschine 5 keine Spannung mehr an dem elektrischen Netzwerk 1 beziehungsweise dem Zwischenkreis 13 bereitstellen kann. Durch den Gleichstromwandler 14 und/oder den Klimakompressor 16, sofern er aktiviert ist, wird sich ein Zwischenkreiskondensator 17 des Zwischenkreises 13 innerhalb kurzer Zeit entladen. Der Kurzschlussbetrieb (aktiver Kurzschluss) des Pulswechselrichters 9 beziehungsweise Wechselrichters 8 dauert derart lange an, dass dem Netzwerk 1 beziehungsweise dem Zwischenkreis 13 sämtliche Energie entnommen wird, sodass keine Spannung mehr zum Betreiben der elektrischen Maschine 5 und/oder des Hochvolt-Verbrauchers 15 bereitsteht.

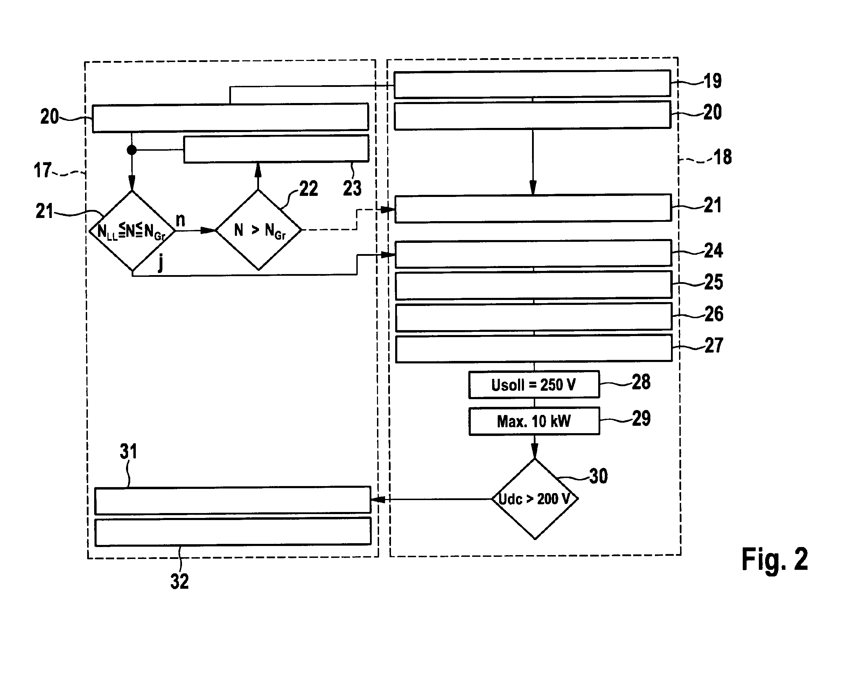

Unter Bezugnahme auf die Figur 2 soll nunmehr das vorteilhafte Verfahren zum Betreiben des Netzwerks 1 erläutert werden, welches einen Widereinstieg in die Regelung der Netzwerkspannung ermöglicht. Dazu zeigt die Figur 2 ein Flussdiagramm, dessen einer Bereich - gestrichelte Linie 17- im Wesentlichen eine Steuerung beziehungsweise Regelung des Verbrennungsmotors 3 und dessen anderer Bereich - gestrichelte Linie 18 - eine Steuerung beziehungsweise Regelung des Pulswechselrichters 9 betrifft. Wird der elektrische Speicher 12, insbesondere eine Hochvolt-Batterie, wie oben beschrieben, von dem Netzwerk 1 elektrisch getrennt und dies in einem Schritt 19 erfasst, so wird der Pulswechselrichter 9 zunächst in einen Notlaufbetrieb 20 geschaltet, der darin besteht, dass der Pulswechselrichter in den Kurzschlussbetrieb 21 beziehungsweise in einen aktiven Kurzschluss geschaltet wird. Befand sich die elektrische Maschine 5 bis dahin im generatorischen Betrieb, wird durch diese Maßnahme verhindert, dass eine Überspannung in dem elektrischen Netzwerk 1 erzeugt wird, welche die Komponenten des Netzwerks 1, insbesondere den Wechselrichter 8, beschädigen könnte. Wie oben beschrieben, führt dies dazu, dass das Netzwerk 1 beziehungsweise der Zwischenkreiskondensator 17 innerhalb kurzer Zeit entladen wird und das System zusammenbricht. Um die Entladungszeit zu verlängern oder die Zeit bis zum Wiedereinstieg der Regelung zu verkürzen, können in einem Schritt 20 an das Netzwerk 1 angeschlossene Hochvolt-Verbraucher 15, wie der Klimakompressor 16, ausgeschaltet beziehungsweise deaktiviert werden.

Zum Reaktivieren des Systems beziehungsweise Netzwerks wird zunächst in einer Abfrage 21 geprüft, ob sich die Drehzahl N der Brennkraftmaschine in einem erlaubten Drehzahlbereich befindet, wobei der Drehzahlbereich durch die Leerlaufdrehzahl N_{LL} des Verbrennungsmotors und eine vorgebbare Grenzdrehzahl N_{Gr}, die in Abhängigkeit von einer durch die elektrischen Maschine 5 im Leerlauf induzierten Spannung gewählt wird, definiert wird. Die Drehzahl N_{Gr} ist dabei in dem vorliegenden Ausführungsbeispiel die Drehzahl, bei der die induzierte Spannung am Zwischenkreis 17 die Grenze von 400 V (maximal erlaubte Dauerspannung am Pulswechselrichter 9) überschreitet. Ergibt die Abfrage 21, dass sich die Drehzahl N oberhalb der Grenzdrehzahl N_{Gr} liegt, wie in einem Schritt 22 dargestellt, so wird in die Steuerung des Verbrennungsmotors 3 eingegriffen und die Drehzahl N des Verbrennungsmotors 3 soweit verringert, bis sie unterhalb der Grenzdrehzahl N_{Gr} liegt, wie in einem Schritt 23 dargestellt. Liegt die Drehzahl N in dem oben beschriebenen erlaubten Drehzahlbereich, kann der Pulswechselrichter 9 aus dem Zustand "Notlaufbetrieb" (aktiver Kurzschluss) in den Zustand "Normalbetrieb" wechseln (Schritt 24). Da die Netzwerkspannung des Zwischenkreises 17 kleiner als eine Unterspannungsgrenze sein kann, muss die üblicherweise vorhandene Unterspannungs-Fehler-Erkennung in einem Schritt 25 verriegelt beziehungsweise deaktiviert werden. In einem darauf folgenden Schritt 26 werden Leistungsschalter beziehungsweise Leistungshalbleiter des Wechselrichters 8/Pulswechselrichters 9 derart geschaltet/geöffnet, dass am Zwischenkreis 17 eine drehzahlabhängige Spannung aufgebaut wird. Diese wird durch die induzierte Polradspannung aus der elektrischen Maschine 5 über Freilaufdioden an dem Zwischenkreis 17 bereitgestellt. Anschließend kann in einem Schritt 27 der Spannungsregler des Zwischenkreises 17 wieder reaktiviert werden. Die von der elektrischen Maschine 5 im Leerlaufbetrieb induzierte Spannung kann somit genutzt werden, um den Spannungsregler zu betreiben, welcher die elektrische Maschine 5 dann generatorisch betreibt/regelt, sodass eine gewünschte Netzwerkspannung durch die elektrische Maschine 5 erzeugt wird. Die im Leerlaufbetrieb induzierte Spannung dient hierbei sozusagen als Starterspannung für das Starten der Spannungsregelung des Netzwerks 1 nach dem Ausfall des elektrischen Speichers 12. Vorteilhafterweise reguliert der Spannungsregler die Netzwerkspannung Usoll auf 250 V (Schritt 28) und eine Leistung von maximal 10 kW (Schritt 29). In einem Schritt 30 wird geprüft, ob die Netzwerkspannung einen Wert von Udc = 200 V überschreitet. Ist dies der Fall, so werden in einem darauf folgenden Schritt 31 an das Netzwerk 1 angeschlossene Hochvolt-Verbraucher 15, wie der Klimakompressor 16, freigegeben beziehungsweise aktiviert. Ab diesem Zeitpunkt wird ein Überschreiten der Grenzdrehzahl N_{Gr} wieder erlaubt (Schritt 32).

Insgesamt wird somit durch das vorteilhafte Verfahren auf einfache Art und Weise ermöglicht, die Netzwerkspannung nach einem Ausfall des elektrischen Speichers 12 zu reaktivieren und auf einen vorgebbaren Wert einzustellen. Mit anderen Worten kann nach einem Ausfall des elektrischen Speichers 12 in die Spannungsregelung des Netzwerks 1 wieder eingestiegen werden.

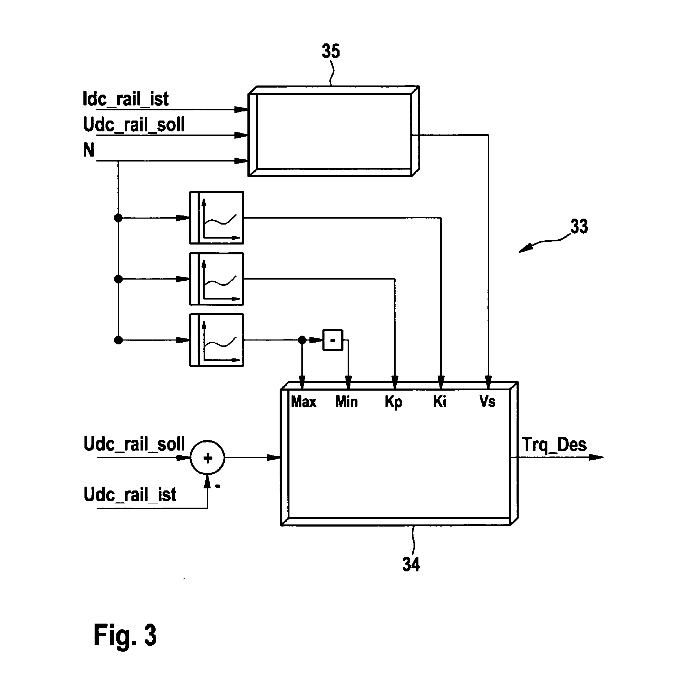

Die Figur 3 zeigt in einer schematischen Darstellung einen Spannungsregler 33 des elektrischen Netzwerks 1 beziehungsweise des Zwischenkreises 17 zur Spannungsregelung des Netzwerks 1. Der Spannungsregler 33 weist einen PI-Regler 34 auf, dem als Eingangsgröße die Differenz der Sollspannung Udc_rail_soll und der Istspannung Udc_rail_ist des Zwischenkreises 17 zugeführt wird. Auf Basis der Differenzen bestimmt der PI-Regler 34 ein Solldrehmoment Trq_Des der elektrischen Maschine 5, sodass diese eine entsprechende Spannung zum Kompensieren der Differenz erzeugt. Weiterhin werden dem PI-Regler 34 als Eingangsgrößen eine von der Drehzahl N der elektrischen Maschine 5 abhängige Konstante Kp, eine von der Drehzahl N abhängige Konstante Ki sowie der oben beschriebene Drehzahlbereich Max-Min vorgegeben. Die Drehzahl N wird weiterhin einer Vorsteuerung 35 zugeführt, welcher außerdem der Iststrom Idc_rail_ist und die Sollspannung Udc_rail_soll des Zwischenkreises 17 als Eingangsgrößen zugeführt werden. Die Vorsteuerung 35 führt ein Signal Vs an den PI-Regler 34.

Das vorteilhafte Verfahren kann ebenso in dem Fall angewandt werden, in dem der elektrische Speicher 12 aufgrund einer Fehlfunktion von dem Netzwerk 1 getrennt und die elektrische Maschine 5 derart motorisch beansprucht wird, dass der Zwischenkreiskondensator 17 vollständig entladen wird.

Wenn die Hochvolt-Batterie bei einer bestimmten Verbrennungsmotor-Leerlaufdrehzahl ausfällt und es dabei zu einem bestimmten Lastsprung kommt, besteht die Möglichkeit, dass der Verbrennungsmotor ausgeht. Beim Einschalten einer hohen Last, beispielsweise wen der DC/DC-Wandler ein- und wieder ausgeschaltet wird, könnte bei geringer Leerlaufdrehzahl der Motor ausgehen. Eine vorteilhafte Möglichkeit, dies zu verhindern wird in einer vorteilhaften Ausgestaltung der Erfindung erreicht, indem die Leerlaufdrehzahl des Verbrennungsmotors erhöht wird, in besonders vorteilhafter Weise von sechshundert auf tausend Umdrehungen pro Minute und/oder indem dem elektrischen Antrieb ein bestimmtes Sollmoment vorgegeben wird, wodurch eine Drehmomentenreserve erhalten wird.

Die Erhöhung der Leerlaufdrehzahl des Verbrennungsmotors und/oder die Vorgaben eines bestimmten Sollmoments wird in vorteilhafter Weise vom Motor-Steuergerät über entsprechende Ansteuersignale durchgeführt.

## Patentansprüche

1. Verfahren zum Betreiben eines elektrischen Netzwerks,
wobei das Netzwerk mit einer Spannungsregelung mindestens einen elektrischen Speicher (12), mindestens eine mit der Drehzahl (N) angetriebene elektrische Maschine (5) und mindestens einen die elektrische Maschine ansteuernden Wechselrichter (8) aufweist,
wobei bei Erfassen einer Fehlfunktion der elektrische Speicher (12) von dem Netzwerk elektrisch getrennt und der Wechselrichter (8)
in einen Kurzschluss-Betrieb geschaltet wird, wodurch der Zwischenkreiskondensator (17) eines Zwischenkreises (13) entladen wird,
**dadurch gekennzeichnet, dass**
wenn die Drehzahl (N) unterhalb einer Grenzdrehzahl (N_{Gr}) liegt,
die Leistungshalbleiter des Wechselrichters (8) derart geschaltet werden, dass durch die angetriebene elektrische Maschine (5) eine Spannung induziert und mittels Freilaufdioden am elektrischen Netzwerk (1) bereitgesteilt wird,
sodass in dem Netzwerk (1) eine drehzahlabhängige Spannung aufgebaut wird, welche zur Reaktivierung der Spannungsregelung benutzt wird.

2. Verfahren nach Anspruch 1, **dadurch gekennzeichnet, dass** bei Erfassen der Fehlfunktion zumindest ein mit dem Netzwerk elektrisch verbundener Verbraucher, insbesondere Hochvolt-Verbraucher abgeschaltet wird.

3. Verfahren nach einem der vorhergehenden Ansprüche, **dadurch gekennzeichnet, dass** die elektrische Maschine durch einen Verbrennungsmotor angetrieben wird.

4. Verfahren nach einem der vorhergehenden Ansprüche, **dadurch gekennzeichnet, dass** es durchgeführt wird, wenn die Drehzahl der elektrischen Maschine oberhalb einer Leerlaufdrehzahl des Verbrennungsmotors liegt.

5. Verfahren nach einem der vorhergehenden Ansprüche, **dadurch gekennzeichnet, dass** die Grenzdrehzahl in Abhängigkeit von einer maximal erlaubten induzierten Spannung vorgegeben wird.

6. Verfahren nach einem der vorhergehenden Ansprüche, **dadurch gekennzeichnet, dass** der Kurzschlussbetrieb des Wechselrichters beibehalten wird, solange die Drehzahl der elektrischen Maschine oberhalb der Grenzdrehzahl liegt.

7. Verfahren nach einem der vorhergehenden Ansprüche, **dadurch gekennzeichnet, dass** die Drehzahl des Verbrennungsmotors verringert wird, wenn sie oberhalb der Grenzdrehzahl liegt.

8. Verfahren nach einem der vorhergehenden Ansprüche, **dadurch gekennzeichnet, dass** als Wechselrichter ein Pulswechselrichter verwendet wird.

9. Verfahren nach einem der vorhergehenden Ansprüche, **dadurch gekennzeichnet, dass** bei ausgefallener Hochvolt-Batterie und bei einer bestimmten Verbrennungsmotor-Leerlaufdrehzahl und auftretendem vorgebbaren Lastsprung zur Verhinderung des Ausgehens des Verbrennungsmotors die Leerlaufdrehzahl des Verbrennungsmotors erhöht wird, insbesondere von sechshundert auf tausend Umdrehungen pro Minute.

10. Verfahren nach einem der vorhergehenden Ansprüche, **dadurch gekennzeichnet, dass** bei ausgefallener Hochvolt-Batterie und bei einer bestimmten Verbrennungsmotor-Leerlaufdrehzahl und auftretendem vorgebbaren Lastsprung zur Verhinderung des Ausgehens des Verbrennungsmotors dem elektrischen Antrieb ein bestimmtes Sollmoment vorgegeben wird, wodurch eine Drehmomentenreserve erhalten wird.

11. Verfahren nach einem der vorhergehenden Ansprüche, **dadurch gekennzeichnet, dass** die Erhöhung der Leerlaufdrehzahl des Verbrennungsmotors und/oder die Vorgaben eines bestimmten Sollmoments vom Motor-Steuergerät über entsprechende Ansteuersignale durchgeführt

## Claims

1. Method of operating an electrical network, with the network having a voltage control means, at least one electrical storage means (12), at least one electrical machine (5) which is driven at the rotation speed (N), and at least one inverter (8) which actuates the electrical machine, with, when a malfunction is detected, the electrical storage means (12) being electrically disconnected from the network and the inverter (8) being switched to short-circuit mode, as a result of which the intermediate circuit capacitor (17) of an intermediate circuit (13) is discharged, **characterized in that**, when the rotation speed (N) is below a limit rotation speed (Nₗᵢₘᵢₜ) the power semiconductors of the inverter (8) are switched in such a way that a voltage is induced by the driven electrical machine (5) and made available to the electrical network (1) by means of free-wheeling diodes, so that a rotation-speed-dependent voltage which is used for reactivating the voltage control means is established in the network (1).

2. Method according to Claim 1, **characterized in that**, when the malfunction is detected, at least one load, in particular a high-voltage load, which is electrically connected to the network is disconnected.

3. Method according to either of the preceding claims, **characterized in that** the electrical machine is driven by an internal combustion engine.

4. Method according to one of the preceding claims, **characterized in that** it is carried out if the rotation speed of the electrical machine is above an idling rotation speed of the internal combustion engine.

5. Method according to one of the preceding claims, **characterized in that** the limit rotation speed is predefined as a function of a maximum permissible induced voltage.

6. Method according to one of the preceding claims, **characterized in that** the short-circuit mode of the inverter is maintained for as long as the rotation speed of the electrical machine is above the limit rotation speed.

7. Method according to one of the preceding claims, **characterized in that** the rotation speed of the internal combustion engine is reduced if it is above the limit rotation speed.

8. Method according to one of the preceding claims, **characterized in that** a pulse-controlled inverter is used as the inverter.

9. Method according to one of the preceding claims, **characterized in that**, when the high-voltage battery fails and at a specific internal combustion engine idling rotation speed and when a predefinable load change for preventing the internal combustion engine from stopping occurs, the idling rotation speed of the internal combustion engine is increased, in particular from six hundred to one thousand revolutions per minute.

10. Method according to one of the preceding claims, **characterized in that**, when the high-voltage battery fails and at a specific internal combustion engine idling rotation speed and when a predefinable load change for preventing the internal combustion engine from stopping occurs, a specific setpoint torque is predefined to the electric drive, as a result of which a torque reserve is obtained.

11. Method according to one of the preceding claims, **characterized in that** the increase in the idling rotation speed of the internal combustion engine and/or the prespecification of a specific setpoint torque is carried out by the engine controller by means of corresponding actuation signals.

## Revendications

1. Procédé de fonctionnement d'un réseau électrique ;
le réseau doté d'une régulation de tension comportant au moins un accumulateur électrique (12), au moins un moteur électrique (5) entraîné en entrée au nombre de tours (N) et au moins un ondulateur (8) excitant le moteur électrique ;
lors de la détection d'un dysfonctionnement, l'accumulateur électrique (12) étant débranché sur le plan électrique du réseau et l'ondulateur (8) étant basculé dans un mode de court-circuit, déchargeant ainsi le condensateur de circuit intermédiaire (17) d'un circuit intermédiaire (13) ;
**caractérisé en ce que** lorsque le nombre de tours (N) se situe en dessous d'un nombre de tours limite (N_{Gr}) :
les semi-conducteurs de puissance de l'ondulateur (8) sont commutés de façon à induire une tension à travers le moteur (5) électrique entraîné en entrée et à la conduire au réseau électrique (1) au moyen des diodes de roue libre ;
de sorte qu'une tension dépendant du nombre de tours est appliquée dans le réseau (1), celle-ci étant utilisée par réactiver la régulation de la tension.

2. Procédé selon la revendication 1, **caractérisé en ce que** lors de la détection du dysfonctionnement, au moins un récepteur relié de façon électrique au réseau, notamment un récepteur à haut voltage, est déconnecté.

3. Procédé selon l'une quelconque des revendications précédentes, **caractérisé en ce que** le moteur électrique est entraîné en entrée par un moteur à combustion interne.

4. Procédé selon l'une quelconque des revendications précédentes, **caractérisé en ce qu'**il est mis en oeuvre lorsque le nombre de tours du moteur électrique se situe au-dessus d'un nombre de tours à vide du moteur à combustion interne.

5. Procédé selon l'une quelconque des revendications précédentes, **caractérisé en ce que** le nombre de tours limite est défini en fonction d'une tension induite autorisée maximale.

6. Procédé selon l'une quelconque des revendications précédentes, **caractérisé en ce que** le mode de court-circuit de l'ondulateur est conservé tant que le nombre de tours du moteur électrique se situe au-dessus du nombre de tours limite.

7. Procédé selon l'une quelconque des revendications précédentes, **caractérisé en ce que** le nombre de tours du moteur à combustion interne est réduit lorsqu'il se situe au-dessus du nombre de tours limite.

8. Procédé selon l'une quelconque des revendications précédentes, **caractérisé en ce que** l'ondulateur est un ondulateur pulsé.

9. Procédé selon l'une quelconque des revendications précédentes, **caractérisé en ce qu'**en cas de panne de batterie à haut voltage et en présence d'un certain nombre de tours à vide du moteur à combustion interne et d'un saut de charge prédéfini, le nombre de tours à vide du moteur à combustion interne est accru, notamment de six cents à mille tours par minute, pour empêcher l'arrêt du moteur à combustion interne.

10. Procédé selon l'une quelconque des revendications précédentes, **caractérisé en ce qu'**en cas de panne de batterie à haut voltage et en présence d'un certain nombre de tours à vide du moteur à combustion interne et d'un saut de charge prédéfini, un couple théorique défini est utilisé, permettant de conserver une certaine réserve de rotation, de façon à empêcher l'arrêt du moteur à combustion interne.

11. Procédé selon l'une quelconque des revendications précédentes, **caractérisé en ce que** l'augmentation du nombre de tours à vide du moteur à combustion interne et/ou les directives d'utilisation d'un couple théorique défini sont mises en oeuvre par l'appareil de commande du moteur par le biais de signaux de commande correspondants.
